# EUROPEAN PATENT SPECIFICATION

(11) **EP 1 953 016 B1**
(45) Date of publication and mention of the grant of the patent: **12.08.2009**
(21) Application number: 08150649.5
(22) Date of filing: 25.01.2008
(51) Int. Cl.: B60H 1/00

(54) **Traverse motion HVAC valve**
Querbewegungs-HVAC-Ventil
Clapet HVAC à mouvement transversal

(30) Priority: 05.02.2007 US 702262
(43) Date of publication of application: 06.08.2008
(73) Proprietor: Delphi Technologies, Inc., Troy, Michigan 48007 (US)
(72) Inventor: Kowalski, Gregory J., Sanborn, NY 14132 (US); Goupil, JR, Gerald M., N. Tonawanda, NY 14120 (US)
(74) Representative: Robert, Vincent

(56) References cited:
- EP-A- 1 247 668
- EP-A- 1 526 015
- GB-A- 1 333 643
- JP-A- 60 060 026

## Description

### TECHNICAL FIELD

The invention relates to a climate control system also commonly referred to as an HVAC system (heating, ventilation, and air conditioning) for a vehicle and more specifically to a valve assembly for controlling airflow through an outlet of the climate control system.

### BACKGROUND OF THE INVENTION

Conventional heating, ventilation and air conditioning (HVAC) systems for vehicles generally include a housing, an evaporator, a heater core having a housing, an evaporator assembly coupled to the housing, an evaporator, a heater core, an air inlet, a fan and various doors or mode valves for controlling the volume and direction of air flow and generating outlet air of a desired volume and temperature. Together these components receive, temper and direct the flow of forced air through several outlets or vents in the vehicle. The outlets through which the forced air ultimately exits are determined by the various doors which move between open and closed positions and cause air flow to be forced in one direction or another or a combination of both. Air may be directed to various areas of the car depending on the state of the mode valves. For example, air may be forced through outlets directed at the windshield in a defrost or defog mode, or through outlets directed at mid-height level in an air-conditioning mode, or to lower outlets directed to the floor in a heat mode, or various combinations thereof. Generally, designs have been utilized in which the housing has a plurality of outlets each having a periphery. More recently, the housing is defined by two oppositely facing outlets. A motor or mechanism is attached to a shaft that is rotatably supported by the housing outside the peripheries of the outlets. A rotary plate valve is disposed about the shaft and is movable to cover or block air from exiting the outlets in a closed position and uncover or unblock the outlets to permit air to exit the housing in an open position. The plate valve's periphery is connected to the shaft and the plate valve is covered with material which complies with the interior of the housing in order to form an air seal. This material generally is made from a compressible cellular foam or molded thermoset rubber that forms a wiper. As the shaft rotates, the plate valve rotates with the shaft so that the foam or rubber attached to the plate valve seals the outlets.

These rotary plate valves require the plate and its seal to be in sliding contact with the housing when alternating between the open and closed positions. Such a sliding valve requires relatively high contact pressure in order to compress the foam or deform the rubber wiper in order to achieve a desired seal.

Furthermore, these rotary plate valves rely on a torque limited motor to rotate the shaft end either directly or remotely via a cam, link and lever in order to move the valve plate to the open and closed positions. When the contact pressure is too high for the motor to overcome, the plate valve can become immobilized in an undesired position and may result in failure of the motor. HVAC systems having these rotary plate valves do not have a means to direct the cold air from the evaporator core and hot air from the heater towards the outlet in order to achieve a desired outlet temperature while in an open position. Additionally, these rotary plate valves do not have a means to meter a portion of these airstreams while in an intermittent position between open and closed. These intermittent positions are desired in order to achieve the proper air balance between the various outlets such as the lower outlets directed to the floor in a heat mode.

Examples of rotary valves in HVAC systems are included in U.S. Patents 4,683,913 to Hoffman et al. and 5,009,392 to Ostrand, as well as in the closest prior art, document EP 1 247 668.

Hoffman et al. teach a rotary valve for sealing outlets defined by a curved surface. The air valve has a radius of curvature measured from an axis which is offset from that of the radius of curvature for the surface defining the outlets being sealed. This valve's plate and sealing surface which cover or uncover an outlet are parallel with the axis of the shaft and as such is only able to seal an outlet that is located parallel with the axis of the shaft. The contact pressure is therefore high when the valve is in a closed position and diminishes to zero after the valve is rotated to an open position.

Although the prior art provides valves which move between open and closed positions, there remains a need for a valve that does not produce high frictional loads while simultaneously aiding in directing air flow through the outlet of the housing. Furthermore, there also remains a need for a valve that can direct the cold air from the evaporator core and hot air from the heater towards the outlet in order to achieve a desired outlet temperature and can meter a portion of these airstreams while in an intermittent position between open and closed. Additionally, there remains a need for a rotary valve whose plate and sealing surface is perpendicular to the shaft.

### SUMMARY OF THE INVENTION

The invention provides such an assembly for controlling air flow in an HVAC system wherein the rotatable shaft has a threaded section. The interior surface of the plate valve is threaded and is in threaded engagement with the threaded section of the shaft for moving the plate valve axially away from the outlet in response to rotation of the shaft in a first direction and moving the first plate valve axially toward the outlet in response to rotation of the shaft in a second direction opposite to the first direction while the plate valve is kept from rotating due to its relative engagement with the outlet.

The invention provides a valve which uses linear valve motion in order to seal an outlet with a uniform seal about the periphery. Moreover, the linear motion eliminates the friction related to sliding described in the prior art and thereby reduces the risk of failure or fatigue. Additionally, the invention structurally baffles a hot or cold airstream towards the outlet to facilitate air mixing in order to achieve the desired outlet temperature.

### BRIEF DESCRIPTION OF THE DRAWINGS

Other advantages of the present invention will be readily appreciated, as the same becomes better understood by reference to the following detailed description when considered in connection with the accompanying drawings wherein:

Figure 1 is a cross-sectional view of an embodiment of an HVAC system;

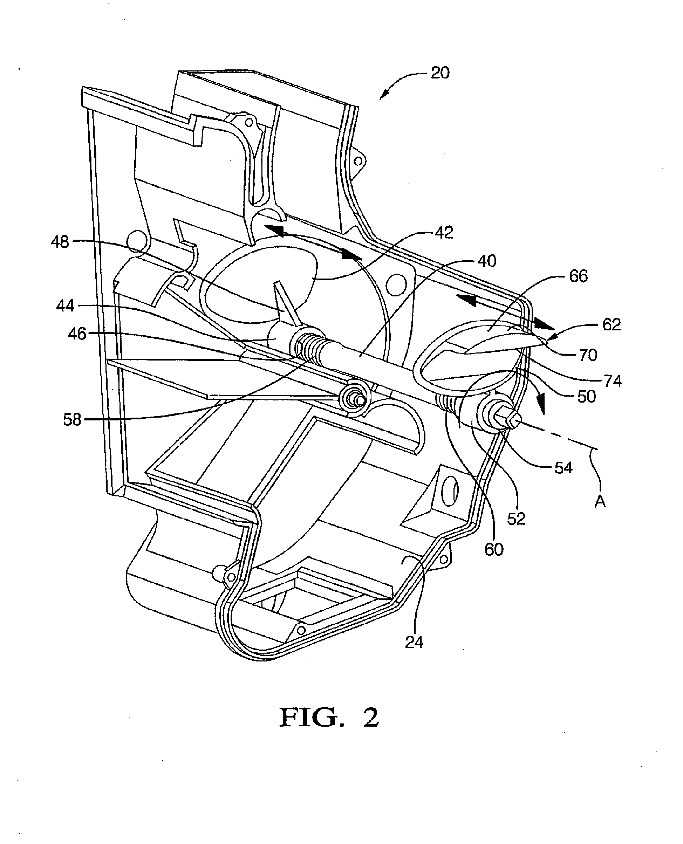

Figure 2 is a perspective cross-sectional view of another embodiment of the invention illustrating a pair of plate valves;

Figure 3 is a fragmentary view of the embodiment of Figure 2 illustrating the shaft, valves and guide;

Figure 4 is a fragmentary view of the embodiment of Figure 3 illustrating the valve in a closed position;

Figure 5 is a fragmentary view of the embodiment of Figure 3 illustrating the valve in an open position;

Figure 6 is fragmentary cross-sectional view of the embodiment shown in Figure 3; and

Figure 7 is an alternative embodiment of the embodiment of an HVAC system.

### DESCRIPTION OF THE PREFERRED EMBODIMENT

A plurality of different embodiments of the invention are shown in the Figures of the application. Similar features are shown in the various embodiments of the invention. Similar features are structured similarly, operate similarly, and/or have the same function unless otherwise indicated by the drawings or this specification. Furthermore, particular features of one embodiment can replace corresponding features in another embodiment unless otherwise indicated by the drawings or this specification.

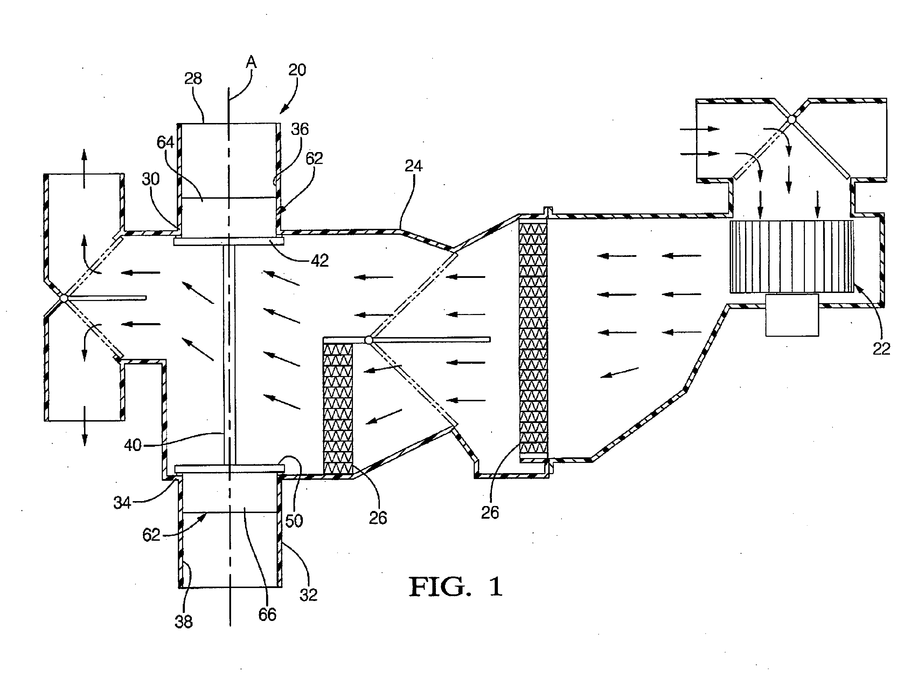

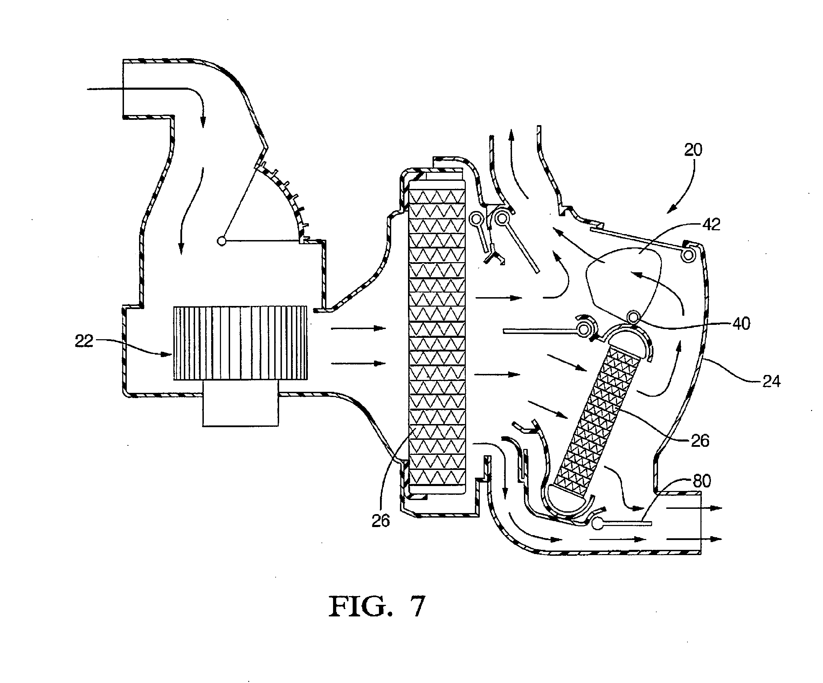

A climate control or HVAC system **20** can be disposed in a vehicle to control conditions associated with air inside a passenger compartment of a vehicle. The exemplary climate control system **20** includes a blower **22** for blowing air through the housing **24** and a plurality of heat exchangers **26** for heating and cooling the air in the housing **24,** as shown in Figure 1 and 7.

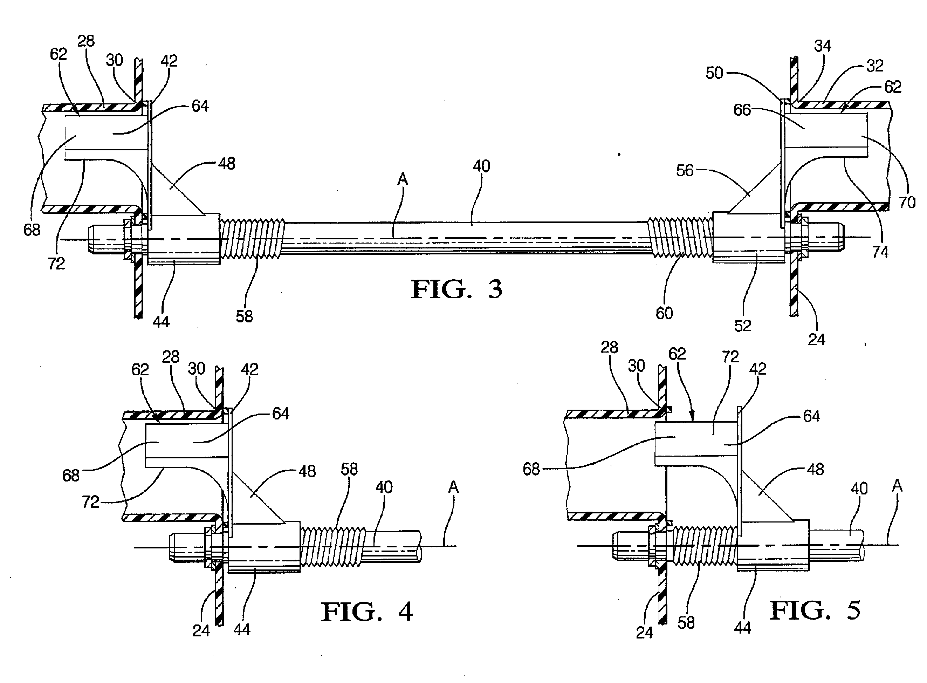

Referring to Figures 3-6, the housing **24** defines a first outlet **28** having a first outer periphery **30** and a second outlet **32** having a second outer periphery **34.** The outlets **28, 32** oppositely face one another. The first outer periphery **30** may have a fan-like shape extending radially from the shaft, but is not limited to this geometry, and defines a first contoured surface **36.** The second outer periphery **34** may similarly have a fan-like shaped, but is not limited to this geometry, and defines a second contoured surface **38** equal in size and shape to the first contoured surface **36.**

A shaft **40** is rotatably supported by the housing **24** outside the peripheries **30, 34** of the outlets **28, 32** and extends along an axis **A.** The shaft **40** extends between and perpendicular to the peripheries **30, 34** of the outlets **28, 32.**

The assembly **20** includes a first plate valve **42** for covering the first outer periphery **30** of the first outlet **28** in a closed position and axially movable to an open position. Figures 4 and 5 illustrate the first plate valve **42** in the open and closed positions respectively. The first plate valve **42** includes a first bushing **44** defining a first interior surface **46** surrounding the shaft **40.** The first valve **42** also includes a first plate extending radially from the first bushing **44** in a fan-like shape for sealing the first periphery **30** of the first outlet **28.** A first reinforcing web **48** interconnects the first bushing **44** and the first plate for reinforcing the first plate on the first bushing **44.**

A second plate valve **50** is included for covering the second outer periphery **34** of the second outlet **32** in a closed position and movable to an open position. The second valve **50** includes a second bushing **52** defining a second interior surface **54** surrounding the shaft **40.** The second valve **50** also includes a second plate extending radially from the second bushing **52** in a fan-like shape for sealing the second periphery **34** of the second outlet **32.** A second reinforcing web **56** interconnects the second bushing **52** and the second plate for reinforcing the second plate on the second bushing **52.**

The assembly **20** is distinguished by the shaft **40** having oppositely threaded first and second sections **58, 60** disposed at opposite ends of the shaft **40** as best shown in Figure 3. The interior surfaces **46, 54** of the bushings **44, 52** are oppositely threaded, and the first interior surface **46** of the first bushing **44** is in threaded engagement with the first section **58** of the shaft **40,** as illustrated in Figure 3. Likewise, the second interior surface **54** of the second bushing **52** is in threaded engagement with the second section **60** of the shaft **40.** The threaded engagements move the plate valves **42, 50** axially toward one another in response to rotation of the shaft **40** in a first direction and move the plate valves **42, 50** axially away from one another in response to rotation of the shaft **40** in a second direction opposite to the first direction.

The assembly **20** includes a guide **62,** generally indicated, for limiting rotation of the valves **42, 50** relative to the axis **A** in response to rotation of the shaft **40.** The first valve **42** may include a first guide plate **64** and the second valve **50** may include a second guide plate **66** to define the guide **62.**

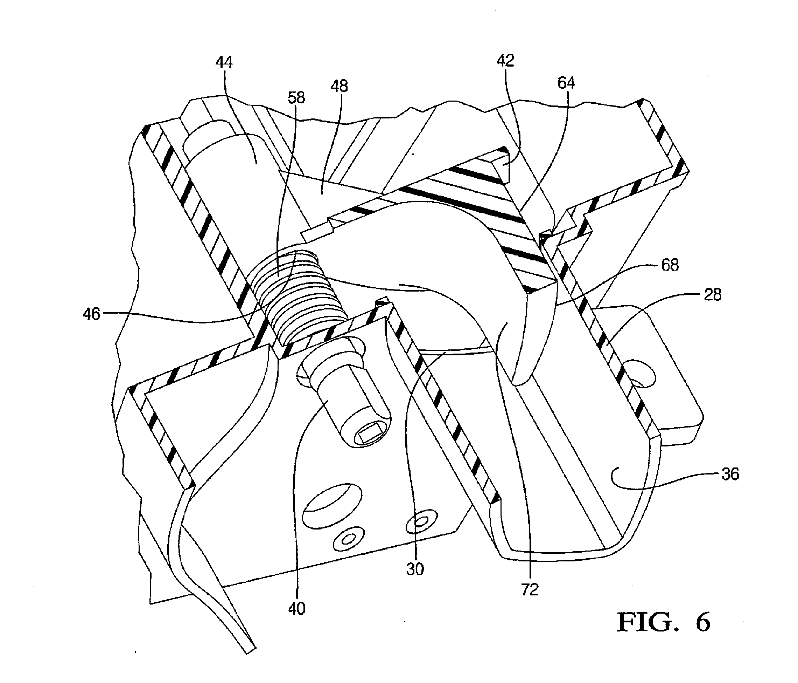

As best shown in Figure 6, the first guide plate **64** defines a first upper surface **68** and the second guide plate **66** defines a second upper surface **70.** The first upper surface **68** of the first guide plate **64** extends parallel to and through the first contoured surface **36** of the first outlet **28** for limiting rotation of the first valve **42** relative to the axis **A** in response to rotation of the shaft **40.** The first guide plate **64** defines a first lower surface **72** which has a contoured shape extending parallel to the axis **A** for directing radial air flow axially through the first outlet **28** in the open position. Similarly, the second upper surface **70** of the second guide plate **66** extends parallel to and through the second contoured surface **38** of the second outlet **32** for restricting rotation of the second valve **50** about the axis **A** in response to rotation of the shaft **40.** The second guide plate **66** defines a second lower surface **74** which has a contoured shape extending parallel to the axis **A** for directing radial air flow axially through the second outlet **32** in the open position. The upper surfaces **68, 70** of the guide plates **64, 66** profile the contoured surfaces of the outlet and the lower surfaces **72, 74** are flat, however the surfaces of the guide plates **64, 66** are not limited to this geometry.

Figure 7 illustrates an alternative embodiment of the HVAC system having a plurality of rotary valves **80** and detailing an arrangement where the plate valves **42, 50** would be able to catch the air flow and redirect the path of the air flow into the outlets **28, 32.**

While the invention has been described with reference to an exemplary embodiment, it will be understood by those skilled in the art that various changes may be made and equivalents may be substituted for elements thereof without departing form the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. An assembly **(20)** for controlling air flow in an HVAC system **(20)** comprising;
a housing **(24)** defining a first outlet **(28)** having a first outer periphery **(30),**
a shaft **(40)** rotatably supported by said housing **(24)** outside said first periphery **(30)** of said first outlet **(28)** and extending along an axis **(A),**
a first plate valve **(42)** for covering said first outer periphery **(30)** of said first outlet **(28)** in a closed position and movable away from said first outlet **(28)** along said axis **(A)** to an open position, **characterized in that**
said first plate valve **(42)** has a first interior surface **(46)** surrounding said shaft **(40)** and also includes a first plate extending radially from said first interior surface **(46)** for sealing said first periphery **(30)** of said first outlet **(28),**
said shaft **(40)** has a threaded first section **(58),** and
said interior surface **(46)** is threaded and in threaded engagement with said first section **(58)** of said shaft **(40)** for moving said first plate valve **(42)** axially away from said first outlet **(28)** in response to rotation of said shaft **(40)** in a first direction and moving said first plate valve **(42)** axially toward said first outlet **(28)** in response to rotation of said shaft **(40)** in a second direction opposite to said first direction.

2. An assembly **(20)** as set forth in claim 1 including a guide **(62)** for limiting rotation of said first valve **(42)** relative to said axis **(A)** in response to rotation of said shaft **(40).**

3. An assembly **(20)** as set forth in claim 2 wherein said housing **(24)** defines a second outlet **(32)** having a second outer periphery **(34)** and oppositely facing said first outlet **(28).**

4. An assembly **(20)** as set forth in claim 3 including a second plate valve **(50)** having a second interior surface **(54)** for covering said second outer periphery **(34)** of said second outlet **(32)** in a closed position and movable axially of said shaft **(40)** to an open position.

5. An assembly **(20)** as set forth in claim 4 wherein said shaft **(40)** has a second section **(60)** oppositely threaded and axially spaced from said first section **(58).**

6. An assembly **(20)** as set forth in claim 5 wherein said interior surfaces **(46, 54)** are oppositely threaded from one another, and
wherein said second interior surface **(54)** is in threaded engagement with said second section **(60)** of said shaft **(40)** for moving said plate valves **(42, 50)** axially toward one another in response to rotation of said shaft **(40)** in said first direction and moving said plate valves **(42, 50)** axially away from one another in response to rotation of said shaft **(40)** in said second direction.

7. An assembly **(20)** as set forth in claim 6 wherein said first outer periphery **(30)** defines a first contoured surface **(36)** of said first outlet **(28)** and said second outer periphery **(34)** defines a second contoured surface **(38)** equal in size and shape to said first contoured surface **(36)** of said first periphery **(30).**

8. An assembly **(20)** as set forth in claim 7 wherein said guide **(62)** includes a first guide plate **(64)** defining a first upper surface **(68)** extending axially from said first plate valve **(42)** for restricting rotation of said first valve **(42)** about said axis **(A)** in response to rotation of said shaft **(40)** and a second guide plate **(66)** defining a second upper surface **(70)** extending axially from said second plate valve **(50)** for restricting rotation of said second valve **(50)** about said axis **(A)** in response to rotation of said shaft **(40).**

9. An assembly **(20)** as set forth in claim 8 wherein said first guide plate **(64)** extends through said first contoured surface **(36)** of said first outlet **(28)** and said second guide plate **(66)** extends through said second contoured surface **(38)** of said second outlet **(32).**

10. An assembly **(20)** as set forth in claim 9 wherein said first upper surface **(68)** of said first guide plate **(64)** is parallel to said first contoured surface **(36)** and said second upper surface **(70)** of said second guide plate **(66)** is parallel to said second contoured surface **(38).**

11. An assembly **(20)** as set forth in claim 8 wherein said first guide plate **(64)** defines a first lower surface **(72)** having a contoured shape extending parallel to said axis **(A)** for directing air flow through said first outlet **(28)** in the open position and said second guide plate **(66)** defines a second lower surface **(74)** having a contoured shape extending parallel to said axis **(A)** for directing air flow through said second outlet **(32)** in the open position.

12. An assembly **(20)** as set forth in claim 6 wherein said outer peripheries **(30, 34)** each have a fan-like shape.

13. An assembly **(20)** as set forth in claim 6 wherein said first plate valve **(42)** includes a first bushing **(44)** defining said first interior surface **(46)** and a first plate extending radially from said first bushing **(44)** and said second plate valve **(50)** includes a second bushing **(52)** defining said second interior surface **(54)** and a second plate extending radially from said second bushing **(52).**

14. An assembly **(20)** as set forth in claim 13 wherein said plates **(64, 66)** each extend radially in a fan-like shape from said shaft **(40).**

15. An assembly **(20)** as set forth in claim 13 wherein said first plate valve (42) includes a first reinforcing web **(48)** interconnecting said first bushing **(44)** and said first plate for reinforcing said first plate on said first bushing **(44)** and said second plate valve **(50)** includes a second reinforcing web **(56)** interconnecting said second bushing **(52)** and said second plate for reinforcing said second plate on said second bushing **(52).**

16. An assembly **(20)** as set forth in claim 6 wherein said shaft **(40)** is supported between and perpendicular to said peripheries **(30, 34)** of said outlets **(28, 32).**

17. An assembly **(20)** as set forth in claim 6 wherein said threaded first and second sections **(58, 60)** of said shaft **(40)** are disposed at opposite ends of said shaft **(40).**

18. An assembly **(20)** as set forth in claim 6 including a blower **(22)** assembly **(20)** for blowing air through said housing **(24).**

19. An assembly **(20)** as set forth in claim 18 including at least one heat exchanger **(26)** for heating and cooling the air in said housing **(24).**

20. An assembly **(20)** as set forth in claim 2 wherein said guide **(62)** includes a first guide plate **(64)** defining a first upper surface **(68)** extending axially from said first plate valve **(42)** for engaging said first outlet **(28)** and restricting rotation of said first valve **(42)** about said axis **(A)** in response to rotation of said shaft **(40).**

21. An assembly **(20)** as set forth in claim 20 wherein said first outer periphery **(30)** defines a first contoured surface **(36)** and said first guide plate **(64)** extends parallel to and through said first contoured surface **(36)** of said first outlet **(28).**

22. An assembly **(20)** as set forth in claim 21 wherein said first upper surface **(68)** of said first guide plate **(64)** is parallel to said first contoured surface **(36).**

23. An assembly **(20)** as set forth in claim 20 wherein said first guide plate **(64)** defines a first lower surface **(72)** having a contoured shape extending parallel to said axis **(A)** for directing air flow through said first outlet **(28)** in the open position.

24. An assembly **(20)** as set forth in claim 2 wherein said first outer periphery **(30)** has a fan-like shape.

25. An assembly **(20)** as set forth in claim 2 wherein said first plate valve **(42)** includes a first bushing **(44)** disposed about said first interior surface **(46)** and a first plate extending radially from said first bushing **(44).**

26. An assembly **(20)** as set forth in claim 25 wherein said first plate extends radially in a fan-like shape from said shaft **(40).**

27. An assembly **(20)** as set forth in claim 25 wherein said first plate valve **(42)** includes a first reinforcing web **(48)** interconnecting said first bushing **(44)** and said first plate for reinforcing said first plate on said first bushing **(44).**

28. An assembly **(20)** as set forth in claim 2 wherein said shaft **(40)** is supported perpendicular to said first periphery **(30)** of said first outlet **(28).**

29. An assembly **(20)** as set forth in claim 2 including a blower **(22)** assembly **(20)** for blowing air through said housing **(24).**

30. An assembly **(20)** as set forth in claim 29 including at least one heat exchanger **(26)** for heating and cooling the air in said housing **(24).**

## Patentansprüche

1. Aufbau (20) zum Steuern eines Luftstroms in einem HVAC-System (20), der aufweist:
ein Gehäuse (24), das einen ersten Auslass (28) mit einem ersten äußeren Umfang (30) definiert,
einen Schaft (40), der rotierbar getragen wird durch das Gehäuse (24) außerhalb des ersten Umfangs (30) des ersten Auslasses (28) und sich entlang einer Achse (A) erstreckt,
ein erstes Plattenventil (42) zum Abdecken des ersten äußeren Umfangs (30) des ersten Auslasses (28) in einer geschlossenen Position und bewegbar weg von dem ersten Auslass (28) entlang der Achse (A) zu einer offenen Position,
**dadurch gekennzeichnet, dass**
das erste Plattenventil (42) eine erste Innenfläche (46) hat, die den Schaft (40) umgibt, und auch eine erste Platte umfasst, die sich radial von der ersten Innenfläche (46) erstreckt zum Abdichten des ersten Umfangs (30) des ersten Auslasses (28),
der Schaft (40) einen ersten Abschnitt (58) mit Gewinde hat, und
die Innenfläche (46) ein Gewinde hat und in einem Gewindeeingriff steht mit dem ersten Abschnitt (58) des Schafts (40) zum Bewegen des ersten Plattenventils (42) axial weg von dem ersten Auslass (28) als Reaktion auf eine Rotation des Schafts (40) in eine erste Richtung und zum Bewegen des ersten Plattenventils (42) axial in Richtung zu dem ersten Auslass (28) als Reaktion auf eine Rotation des Schafts (40) in eine zweite Richtung, entgegengesetzt zu der ersten Richtung.

2. Aufbau (20) gemäß Anspruch 1, einschließlich einer Führung (62) zum Begrenzen einer Rotation des ersten Ventils (42) relativ zu der Achse (A) als Reaktion auf eine Rotation des Schafts (40).

3. Aufbau (20) gemäß Anspruch 2, wobei das Gehäuse (24) einen zweiten Auslass (32) definiert mit einem zweiten äußeren Umfang (34) und dem ersten Auslass (28) gegenüberliegend.

4. Aufbau (20) gemäß Anspruch 3, einschließlich eines zweiten Plattenventils (50) mit einer zweiten Innenfläche (54) zum Abdecken des zweiten äußeren Umfangs (34) des zweiten Auslasses (32) in einer geschlossenen Position und axial zu dem Schaft (40) bewegbar in eine offene Position.

5. Aufbau (20) gemäß Anspruch 4, wobei der Schaft (40) einen zweiten Abschnitt (60) hat, der ein entgegengesetztes Gewinde hat und axial mit Abstand zu dem ersten Abschnitt (58) angeordnet ist.

6. Aufbau (20) gemäß Anspruch 5, wobei die Innenflächen (46, 54) ein entgegengesetztes Gewinde haben, und
wobei die zweite Innenfläche (54) in einem Gewindeeingriff steht mit dem zweiten Abschnitt (60) des Schafts (40) zum Bewegen der Plattenventile (42, 50) axial zueinander als Reaktion auf eine Rotation des Schafts (40) in die erste Richtung und zum Bewegen der Plattenventile (42, 50) axial auseinander als Reaktion auf eine Rotation des Schafts (40) in die zweite Richtung.

7. Aufbau (20) gemäß Anspruch 6, wobei der erste äußere Umfang (30) eine erste konturierte Oberfläche (36) des ersten Auslasses (28) definiert und der zweite äußere Umfang (34) eine zweite konturierte Oberfläche (38) definiert, gleich in Größe und Form zu der ersten konturierten Oberfläche (36) des ersten Umfangs (30).

8. Aufbau (20) gemäß Anspruch 7, wobei die Führung (62) eine erste Führungsplatte (64), die eine erste obere Oberfläche (68) definiert, die sich axial erstreckt von dem ersten Plattenventil (42), zum Beschränken einer Rotation des ersten Ventils (42) um die Achse (A) als Reaktion auf eine Rotation des Schafts (40), und eine zweite Führungsplatte (66) umfasst, die eine zweite obere Oberfläche (70) definiert, die sich axial erstreckt von dem zweiten Plattenventil (50), zum Beschränken einer Rotation des zweiten Ventils (50) um die Achse (A) als Reaktion auf eine Rotation des Schafts (40).

9. Aufbau (20) gemäß Anspruch 8, wobei die erste Führungsplatte (64) sich durch die erste konturierte Oberfläche (36) des ersten Auslasses (28) erstreckt und die zweite Führungsplatte (66) sich durch die zweite konturierte Oberfläche (38) des zweiten Auslasses (32) erstreckt.

10. Aufbau (20) gemäß Anspruch 9, wobei die erste obere Oberfläche (68) der ersten Führungsplatte (64) parallel zu der ersten konturierten Oberfläche (36) ist und die zweite obere Oberfläche (70) der zweiten Führungsplatte (66) parallel zu der zweiten konturierten Oberfläche (38) ist.

11. Aufbau (20) gemäß Anspruch 8, wobei die erste Führungsplatte (64) eine erste untere Oberfläche (72) definiert mit einer konturierten Form, die sich parallel zu der Achse (A) erstreckt, zum Leiten eines Luftstroms durch den ersten Auslass (28) in der offenen Position und die zweite Führungsplatte (66) eine zweite untere Oberfläche (74) definiert mit einer konturierten Form, die sich parallel zu der Achse (A) erstreckt, zum Leiten eines Luftstroms durch den zweiten Auslass (32) in der offenen Position.

12. Aufbau (20) gemäß Anspruch 6, wobei die äußeren Umfänge (30, 34) jeweils eine Fächer- bzw. Lüfter-ähnliche Form haben.

13. Aufbau (20) gemäß Anspruch 6, wobei das erste Plattenventil (42) eine erste Hülse (44), welche die erste Innenfläche (46) definiert, und eine erste Platte umfasst, die sich radial von der ersten Hülse (44) erstreckt, und das zweite Plattenventil (50) eine zweite Hülse (52), welche die zweite Innenfläche (54) definiert, und eine zweite Platte umfasst, die sich radial von der zweiten Hülse (52) erstreckt.

14. Aufbau (20) gemäß Anspruch 13, wobei die Platten (64, 66) sich jeweils radial in einer Fächer- bzw. Lüfter-ähnlichen Form von dem Schaft (40) erstrecken.

15. Aufbau (20) gemäß Anspruch 13, wobei das erste Plattenventil (42) eine erste Verstärkungsrippe (48) umfasst, welche die erste Hülse (44) und die erste Platte miteinander verbindet, zur Verstärkung der ersten Platte auf der ersten Hülse (44) und das zweite Plattenventil (50) eine zweite Verstärkungsrippe (56) umfasst, welche die zweite Hülse (52) und die zweite Platte miteinander verbindet, zur Verstärkung der zweiten Platte auf der zweiten Hülse (52).

16. Aufbau (20) gemäß Anspruch 6, wobei der Schaft (40) zwischen den und senkrecht zu den Umfängen (30, 34) der Auslässe (28, 32) getragen wird.

17. Aufbau (20) gemäß Anspruch 6, wobei die ersten und zweiten Abschnitte (58, 60) mit Gewinde des Schafts (40) an gegenüberliegenden Enden des Schafts (40) angeordnet sind.

18. Aufbau (20) gemäß Anspruch 6, einschließlich eines Gebläse-(22)Aufbaus (20) zum Blasen von Luft durch das Gehäuse (24).

19. Aufbau (20) gemäß Anspruch 18, einschließlich zumindest eines Wärmetauschers (26) zum Heizen und Kühlen der Luft in dem Gehäuse (24).

20. Aufbau (20) gemäß Anspruch 2, wobei die Führung (62) eine erste Führungsplatte (64) umfasst, die eine erste obere Oberfläche (68) definiert, die sich axial von dem ersten Plattenventil (42) erstreckt, zum in Eingriff bringen des ersten Anschlusses (28) und Beschränken einer Rotation des ersten Ventils (42) um die Achse (A) als Reaktion auf eine Rotation des Schafts (40).

21. Aufbau (20) gemäß Anspruch 20, wobei der erste äußere Umfang (30) eine erste konturierte Oberfläche (36) definiert und die erste Führungsplatte (64) sich parallel zu und durch die erste konturierte Oberfläche (36) des ersten Auslasses (28) erstreckt.

22. Aufbau (20) gemäß Anspruch 21, wobei die erste obere Oberfläche (68) der ersten Führungsplatte (64) parallel zu der ersten konturierten Oberfläche (36) ist.

23. Aufbau (20) gemäß Anspruch 20, wobei die erste Führungsplatte (64) eine erste untere Oberfläche (72) mit einer konturierten Form definiert, die sich parallel zu der Achse (A) erstreckt, zum Leiten eines Luftstroms durch den ersten Auslass (28) in der offenen Position.

24. Aufbau (20) gemäß Anspruch 2, wobei der erste äußere Umfang (30) eine Fächer- bzw. Lüfter-ähnliche Form hat.

25. Aufbau (20) gemäß Anspruch 2, wobei das erste Plattenventil (42) eine erste Hülse (44), die an der ersten Innenfläche (46) angeordnet ist, und eine erste Platte umfasst, die sich radial von der ersten Hülse (44) erstreckt.

26. Aufbau (20) gemäß Anspruch 25, wobei die erste Platte sich radial in einer Fächer- bzw. Lüfter-ähnlichen Form von dem Schaft (40) erstreckt.

27. Aufbau (20) gemäß Anspruch 25, wobei das erste Plattenventil (42) eine erste Verstärkungsrippe (48) umfasst, welche die erste Hülse (44) und die erste Platte miteinander verbindet, zum Verstärken der ersten Platte auf der ersten Hülse (44).

28. Aufbau (20) gemäß Anspruch 2, wobei der Schaft (40) senkrecht zu dem ersten Umfang (30) des ersten Auslasses (28) getragen wird.

29. Aufbau (20) gemäß Anspruch 2, einschließlich eines Gebläse-(22)Aufbaus (20) zum Blasen von Luft durch das Gehäuse (24).

30. Aufbau (20) gemäß Anspruch 29, einschließlich zumindest eines Wärmetauschers (26) zum Heizen und Kühlen der Luft in dem Gehäuse (24).

## Revendications

1. Ensemble (20) pour commander le flux d'air dans un système de chauffage/ventilation/conditionnement-d'air (20) comprenant :
un boîtier (24) définissant une première sortie (28) ayant une première périphérie extérieure (30),
un arbre (40) supporté en rotation par ledit boîtier (24) à l'extérieur de ladite première périphérie (30) de ladite première sortie (28) et s'étendant le long d'un axe (A),
une première valve à clapet (42) pour couvrir ladite première périphérie extérieure (30) de ladite première sortie (28) dans une position fermée et déplaçable en éloignement de ladite première sortie (28) le long dudit axe (A) vers une position ouverte,
**caractérisé en ce que**
ladite première valve à clapet (42) possède une première surface intérieure (46) qui entoure ledit arbre (40) et inclut également un premier clapet qui s'étend radialement depuis ladite première surface intérieure (46) pour sceller ladite première périphérie (30) de ladite première sortie (28),
ledit arbre (40) possède un premier tronçon fileté (58), et ladite surface intérieure (46) est taraudée et en engagement vissé avec ledit premier tronçon (58) dudit arbre (40) pour déplacer ladite première valve à clapet (42) axialement en éloignement de ladite première sortie (28) en réponse à une rotation dudit arbre (40) dans une première direction et déplaçant ladite première valve à clapet (42) axialement vers ladite première sortie (28) en réponse à une rotation dudit arbre (40) dans une seconde direction opposée à ladite première direction.

2. Ensemble (20) selon la revendication 1, incluant un guide (62) pour limiter une rotation de ladite première valve (42) par rapport audit axe (A) en réponse à la rotation dudit arbre (40).

3. Ensemble (20) selon la revendication 2, dans lequel ledit boîtier (24) définit une seconde sortie (32) ayant une seconde périphérie extérieure (34) et faisant face à l'opposé de ladite première sortie (28).

4. Ensemble (20) selon la revendication 3, incluant une seconde valve à clapet (50) ayant une seconde surface intérieure (54) pour couvrir ladite seconde périphérie extérieure (34) de ladite seconde sortie (32) dans une position fermée et mobile axialement sur ledit arbre (40) vers une position ouverte.

5. Ensemble (20) selon la revendication 4, dans lequel ledit arbre (40) possède un second tronçon (60) fileté de façon opposée et axialement espacé dudit premier tronçon (58).

6. Ensemble (20) selon la revendication 5, dans lequel lesdites surfaces intérieures (46, 54) sont taraudées en sens opposé l'une par rapport à l'autre, et
dans lequel ladite seconde surface intérieure (54) est en engagement vissé avec ledit second tronçon (60) dudit arbre (40) pour déplacer lesdites valves à clapet (42, 50) axialement l'une vers l'autre en réponse à la rotation dudit arbre (40) dans ladite première direction et pour déplacer lesdites valves à clapet (42, 50) axialement en éloignement l'une de l'autre en réponse à une rotation dudit arbre (40) dans ladite seconde direction.

7. Ensemble (20) selon la revendication 6, dans lequel ladite première périphérie extérieure (30) définit une première surface contourée (36) de ladite première sortie (28), et ladite seconde périphérie extérieure (34) définit une seconde surface contourée (38) égale en taille et en forme à ladite première surface contourée (36) de ladite première périphérie (30).

8. Ensemble (20) selon la revendication 7, dans lequel ledit guide (62) inclut une première plaque de guidage (64) définissant une première surface supérieure (68) s'étendant axialement depuis ladite première valve à clapet (42) pour restreindre une rotation de ladite première valve (42) autour dudit axe (A) en réponse à une rotation dudit arbre (40), et une seconde plaque de guidage (66) définissant une seconde surface supérieure (70) s'étendant axialement depuis ladite seconde valve à clapet (50) pour restreindre une rotation de ladite seconde valve (50) autour dudit axe (A) en réponse à une rotation dudit arbre (40).

9. Ensemble (20) selon la revendication 8, dans lequel ladite première plaque de guidage (64) s'étend à travers ladite première surface contourée (36) de ladite première sortie (28) et ladite seconde plaque de guidage (66) s'étend à travers ladite seconde surface contourée (38) de ladite seconde sortie (32).

10. Ensemble (20) selon la revendication 9, dans lequel ladite première surface supérieure (68) de ladite première plaque de guidage (64) est parallèle à ladite première surface contourée (36), et ladite seconde surface supérieure (70) de ladite seconde plaque de guidage (66) est parallèle à ladite seconde surface contourée (68).

11. Ensemble (20) selon la revendication 8, dans lequel ladite première plaque de guidage (64) définit une première surface inférieure (72) ayant une forme contourée qui s'étend parallèlement audit axe (A) pour diriger un flux d'air à travers ladite première sortie (28) dans la position ouverte, et la seconde plaque de guidage (66) définit une seconde surface inférieure (74) ayant une forme contourée qui s'étend parallèlement audit axe (A) pour diriger un flux d'air à travers ladite seconde sortie (32) dans la position ouverte.

12. Ensemble (20) selon la revendication 6, dans lequel lesdites périphéries extérieures (30, 34) ont chacune une forme semblable à un éventail.

13. Ensemble (20) selon la revendication 6, dans lequel ladite première valve à clapet (42) inclut une première douille (44) définissant ladite première surface intérieure (46) et un premier clapet s'étendant radialement depuis ladite première douille (44), et ladite seconde valve à clapet (50) inclut une seconde douille (52) définissant ladite seconde surface intérieure (54) et un second clapet s'étendant radialement depuis ladite seconde douille (52).

14. Ensemble (20) selon la revendication 13, dans lequel lesdits clapets (64, 66) s'étendent chacun radialement sous une forme semblable à un éventail depuis ledit arbre (40).

15. Ensemble (20) selon la revendication 13, dans lequel ladite première valve à clapet (42) inclut une première nappe de renfort (48) qui interconnecte ladite première douille (44) et ledit premier clapet pour renforcer ledit premier clapet sur ladite première douille (44) et ladite seconde valve à clapet (50) inclut une seconde nappe de renfort (56) qui interconnecte ladite seconde douille (52) et ledit second clapet pour renforcer ledit second clapet sur ladite seconde douille (52).

16. Ensemble (20) selon la revendication 6, dans lequel ledit arbre (40) est supporté entre et perpendiculairement auxdites périphéries (30, 34) desdites sorties (28, 32).

17. Ensemble (20) selon la revendication 6, dans lequel ledit premier et ledit second tronçon fileté (58, 60) dudit arbre (40) sont disposés à des extrémités opposées dudit arbre (40).

18. Ensemble (20) selon la revendication 6, incluant un ensemble ventilateur (22) pour souffler de l'air à travers ledit boîtier (24).

19. Ensemble (20) selon la revendication 18, incluant au moins un échangeur de chaleur (26) pour chauffer et refroidir l'air dans ledit boîtier (24).

20. Ensemble (20) selon la revendication 2, dans lequel ledit guide (62) inclut une première plaque de guidage (64) définissant une première surface supérieure (68) s'étendant axialement depuis ladite première valve à clapet (42) pour engager ladite première sortie (28) et restreindre une rotation de ladite première valve (42) autour dudit axe (A) en réponse à une rotation dudit arbre (40).

21. Ensemble (20) selon la revendication 20, dans lequel ladite première périphérie extérieure (30) définit une première surface contourée (36) et ladite première plaque de guidage (64) s'étend parallèlement et à travers ladite première surface contourée (36) de ladite première sortie (28).

22. Ensemble (20) selon la revendication 21, dans lequel ladite première surface supérieure (68) de ladite première plaque de guidage (64) est parallèle à ladite première surface contourée (36).

23. Ensemble (20) selon la revendication 20, dans lequel ladite première plaque de guidage (64) définit une première surface inférieure (72) ayant une forme contourée qui s'étend parallèlement audit axe (A) pour diriger l'écoulement d'air à travers ladite première sortie (28) dans la position ouverte.

24. Ensemble (20) selon la revendication 2, dans lequel ladite première périphérie extérieure (30) a une forme semblable à un éventail.

25. Ensemble (20) selon la revendication 2, dans lequel ladite première valve à clapet (42) inclut une première douille (44) disposée autour de ladite première surface intérieure (46), et un premier clapet s'étendant radialement depuis ladite première douille (44).

26. Ensemble (20) selon la revendication 25, dans lequel ledit premier clapet s'étend radialement sous une forme semblable à un éventail depuis ledit arbre (40).

27. Ensemble (20) selon la revendication 25, dans lequel ladite première valve à clapet (42) inclut une première nappe de renfort (48) qui interconnecte ladite première douille (44) et ledit premier clapet pour renforcer ledit premier clapet sur ladite première douille (44).

28. Ensemble (20) selon la revendication 2, dans lequel ledit arbre (40) est supporté perpendiculairement à ladite première périphérie (30) de ladite première sortie (28).

29. Ensemble (20) selon la revendication 2, incluant un ensemble à ventilateur (22) pour souffler de l'air à travers ledit boîtier (24).

30. Ensemble (20) selon la revendication 29, incluant au moins un échangeur de chaleur (26) pour chauffer et refroidir l'air dans ledit boîtier (24).
